# EUROPÄISCHE PATENTSCHRIFT

(11) **EP 0 952 082 B1**
(45) Veröffentlichungstag und Bekanntmachung des Hinweises auf die Patenterteilung: **20.08.2003**
(21) Anmeldenummer: 99106181.3
(22) Anmeldetag: 08.04.1999
(51) Int. Cl.: B65B 19/32, B65B 57/02, B65B 57/10, G01N 21/88, G01N 21/89, B65H 26/02, B65H 26/08, B65B 7/04

(54) **Vorrichtung zum Prüfen von Zigarettengruppen**
Apparatus for inspecting groups of cigarettes
Dispositif de contrôle de groupes de cigarettes

(30) Priorität: 21.04.1998 DE 19817824
(43) Veröffentlichungstag der Anmeldung: 27.10.1999
(73) Patentinhaber: Focke & Co. (GmbH & Co.), 27283 Verden (DE)
(72) Erfinder: Focke, Heinz, 27283 Verden (DE); Sinnerbrink, Ralf, 27308 Kirchlinteln (DE)
(74) Vertreter: Bolte, Erich, Dipl.-Ing.

(56) Entgegenhaltungen:
- EP-A- 0 157 087
- EP-A- 0 173 613
- EP-A- 0 424 330
- EP-A- 0 729 025
- DE-A- 4 424 045
- FR-A- 2 709 472
- US-A- 4 053 056
- US-A- 4 682 038
- US-A- 5 341 824
- US-A- 5 686 729

## Beschreibung

Die Erfindung betrifft eine Vorrichtung zum Prüfen von in Lagen formierten Zigarettengruppen hinsichtlich vollständiger bzw. korrekter Ausbildung, wobei Zigarettengruppen aufeinanderfolgend durch einen Zigarettenförderer an einem Prüfaggregat mit einem eine Anzahl von lichtempfindlichen Prüfelementen aufweisenden Prüforgan mit einer Auswerteeinrichtung vorbeibewegbar sind.

Bei der Verpackung von Zigaretten werden Zigarettengruppen gebildet, die dem Inhalt einer Zigarettenpackung entsprechen. Üblicherweise besteht eine Zigarettengruppe aus mehreren, nämlich insbesondere drei Lagen von Zigaretten. Es muss sichergestellt sein, dass der Verpackungsmaschine korrekt ausgebildete Zigarettengruppen zugeführt werden, weil der korrekt ausgebildete Packungsinhalt anhand der fertigen Zigarettenpackung nicht (mehr) überprüft werden kann.

Bekannt ist die Prüfung der korrekten Ausbildung von Zigarettengruppen durch eine optoelektronische Prüfvorrichtung, bei der oberhalb der Bewegungsbahn der Zigarettengruppen einander zugeordnete Paare von Sender und Empfänger für einen Prüfstrahl (Licht) positioniert sind. Eine Lücke in der oberen Lage der Zigaretten führt dazu, dass der Empfänger nicht mit dem reflektierten Prüfstrahl beaufschlagt wird (EP 0 157 087).

Der Erfindung liegt die Aufgabe zugrunde, eine Vorrichtung der eingangs genannten Art vorzuschlagen, die mit geringerem technischen Aufwand eine zuverlässige Prüfung der Zigarettengruppen bei hoher Leistung gewährleistet.

Zur Lösung dieser Aufgabe ist die erfindungsgemäße Vorrichtung durch folgende Merkmale gekennzeichnet:
a) das Prüforgan ist ein CCD-Zeilenchip mit einer Vielzahl von in Dichtreihe nebeneinander angeordneten lichtempfindlichen Bauteilen als Prüfelemente,
b) der CCD-Zeilenchip ist quer zu den Zigaretten der zu prüfenden Zigarettengruppe gerichtet, und oberhalb derselben angeordnet,
c) im Prüfaggregat sind Lichtquellen zur Ausleuchtung der Zigarettengruppe mindestens während der Prüfphase angeordnet,
d) durch den CCD-Zeilenchip ist aufgrund von reflektiertem Licht ein sich aus unterschiedlichen Helligkeitswerten der nebeneinanderliegenden Zigaretten ergebendes Profil der Oberseite der oberen Lage der zu prüfenden Zigarettengruppe erfassbar und in der Auswerteeinheit mit einer standardmäßigen Darstellung vergleichbar.

Die Prüfeinrichtung ist technisch einfach aufgebaut durch den Einsatz einer kostengünstigen Prüfeinheit (CCD-Zeilenchip). Andererseits ist die dadurch gewährleistete Prüfung sehr zuverlässig, weil ein exaktes Profil der Oberfläche der Zigarettengruppe aufgezeichnet und durch Vergleich geprüft werden kann. Die Prüfeinrichtung ist dadurch auch sehr leistungsfähig.

Weitere Einzelheiten und Besonderheiten der Erfindung, insbesondere bevorzugte Anwendungsbeispiele, werden nachfolgend anhand der Figuren 1 bis 5 näher erläutert. Die Figuren 6 bis 12 betreffen Ausführungsformen, welche nicht im Rahmen der Erfindung Liegen. Es zeigt:
- Fig. 1: einen Förderer für Zigarettengruppen in Seitenansicht bzw. im Längsschnitt mit Prüforgan für die Zigarettengruppen,
- Fig. 2: die Vorrichtung gemäß Fig. 1 im Querschnitt in der Schnittebene II-II der Fig. 1,
- Fig. 3: einen versetzten Querschnitt der Vorrichtung gemäß Fig. 1 in der Schnittebene III-III,
- Fig. 4: die Vorrichtung gemäß Fig. 1 im Grundriß,
- Fig. 5: eine graphische Darstellung eines gemessenen Intensitätssignals der Vorrichtung gemäß Fig. 1 bis 4,
- Fig. 6: eine Bobine - gewickelte Materialbahn - mit Prüfvorrichtung im Radialschnitt der Bobine,
- Fig. 7: die Prüfvorrichtung des Ausführungsbeispiels gemäß Fig. 6 in vergrößertem Maßstab,
- Fig. 8: die graphische Darstellung eines gemessenen Intensitätssignals der Vorrichtung gemäß Fig. 6 und 7,
- Fig. 9: eine Prüfvorrichtung für eine Materialbahn im Vertikalschnitt,
- Fig. 10: die graphische Darstellung eines gemessenen Intensitätssignals der Vorrichtung gemäß Fig. 9,
- Fig. 11: die schematische Darstellung einer Prüfvorrichtung für eine fortlaufende Materialbahn im Querschnitt,
- Fig. 12: die Vorrichtung gemäß Fig. 11 im Längsschnitt der Materialbahn.

In den Zeichnungen sind mehrere Ausführungs- bzw. Anwendungsbeispiele für Überwachungs- bzw. Prüfvorrichtungen gezeigt, bei denen mit einem langgestreckten CCD-Zeilenchip 10 als Prüforgan die Oberflächen bzw. die Konturen von an dem Prüforgan vorbeibewegten Gegenständen erfaßt und über eine nicht gezeigte Auswerteeinheit verarbeitet wird. Die Gegenstände werden dabei quer zur Längserstreckung des CCD-Zeilenchips 10 bewegt. Dabei wird ein quer zur Bewegungsrichtung verlaufendes Profil der Oberflächenstruktur des Gegenstands aufgrund unterschiedlicher Helligkeitswerte erfaßt. Die Gegenstände können aber auch längs zur Längserstreckung des CCD-Zeilenchips 10 bewegt werden. Dann wird ein längs zur Bewegungsrichtung verlaufendes Profil der Oberflächenstruktur aufgrund der unterschiedlichen Helligkeitswerte erfaßt.

Alternativ kann eine sich verändernde Struktur eines ortsfesten Gegenstands aufgrund permanenter bzw. phasenweiser Überwachung durch einen CCD-Zeilenchip 10 erfaßt werden. Alle Anwendungsbeispiele betreffen den Bereich der Verpackungstechnik, insbesondere der Zigarettenverpackung.

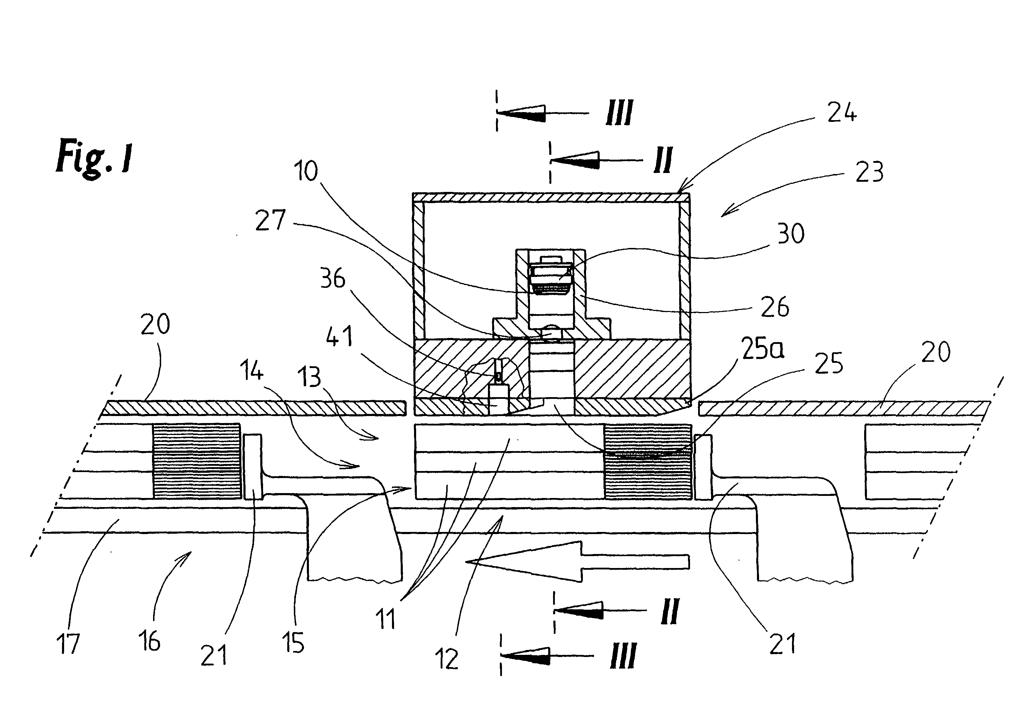

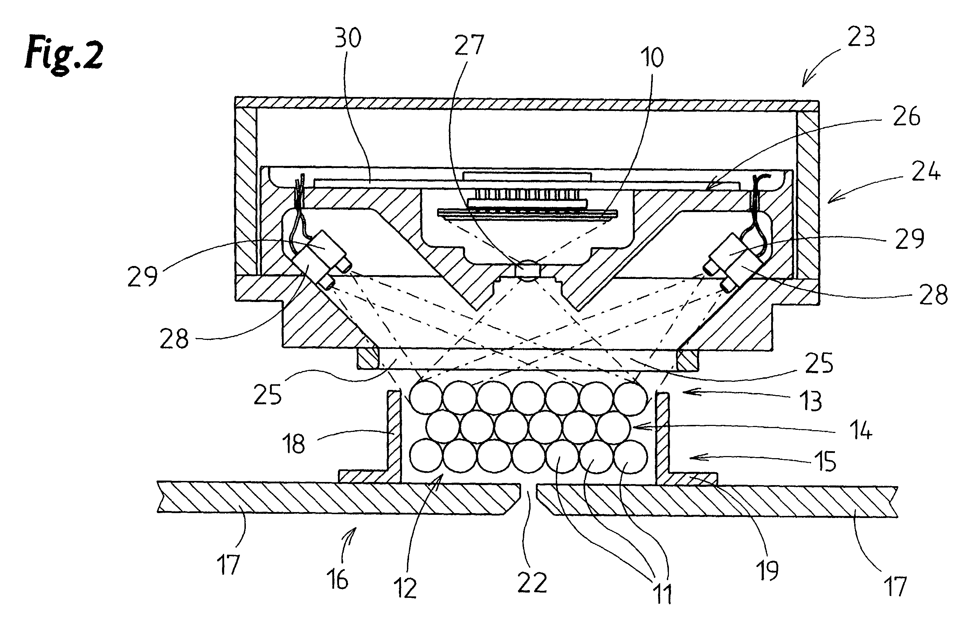

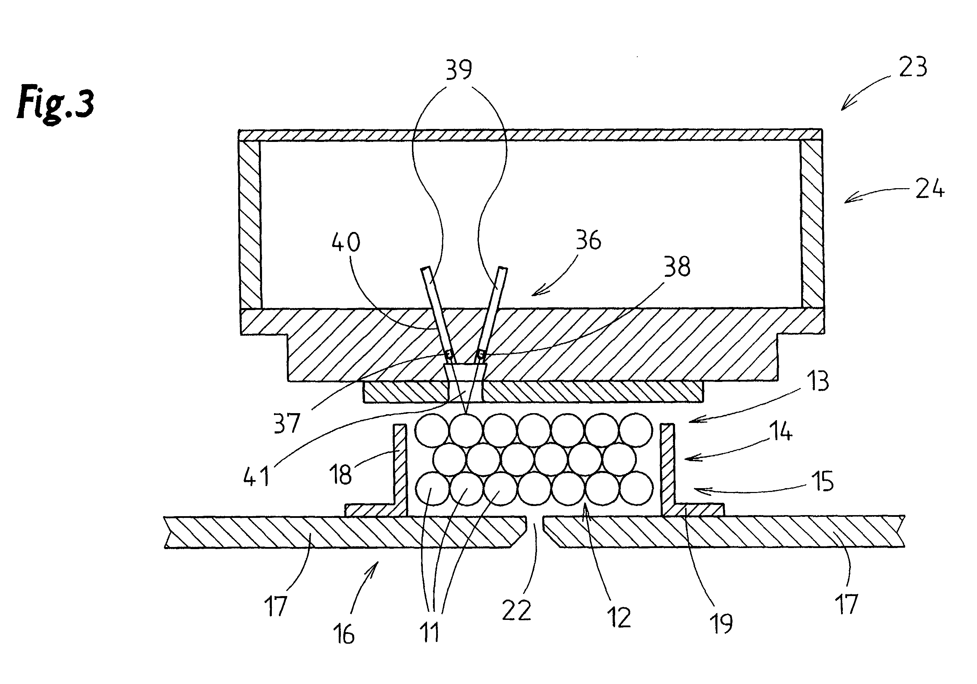

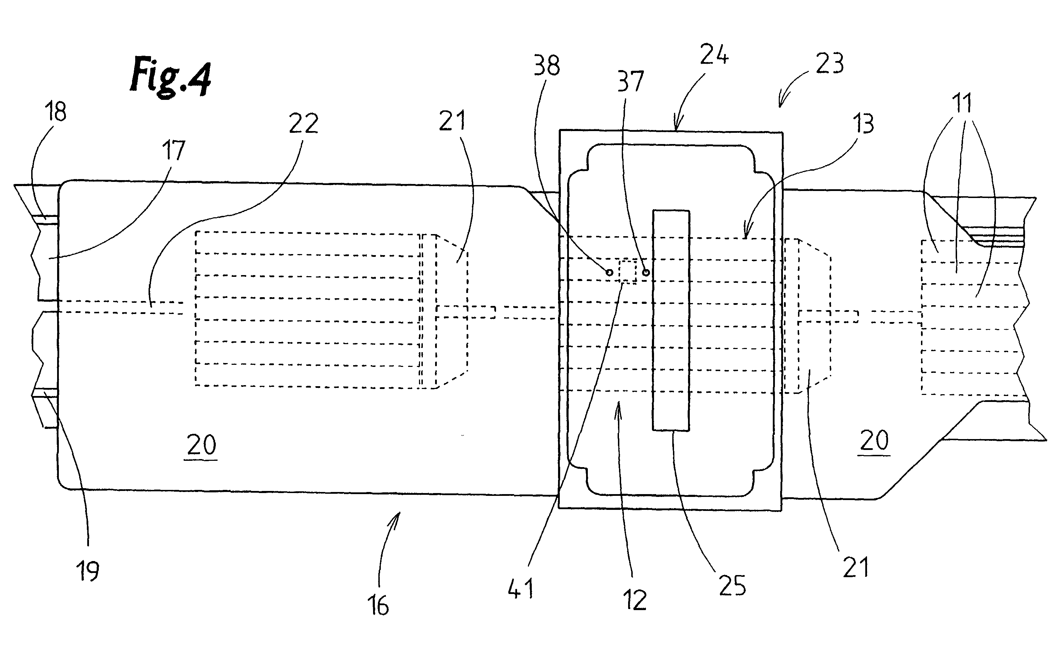

Das in Fig. 1 bis Fig. 5 dargestellte Ausführungsbeispiel befaßt sich mit der Überwachung von Zigaretten 11, und zwar einer Zigarettengruppe 12, die hinsichtlich Anzahl und Formierung dem Inhalt einer Zigarettenpackung entspricht. Bei dem gezeigten Ausführungsbeispiel besteht demnach die Zigarettengruppe 12 aus drei Lagen 13, 14, 15. Entsprechend der üblichen Formation bestehen die beiden äußeren Lagen 13 und 15 aus sieben und die mittlere Lage 14 aus sechs Zigaretten 11. Diese sind gegenüber den Zigaretten 11 der äußeren Lagen 13, 15 in "Sattellage" positioniert.

Die so ausgebildete Zigarettengruppe 12 wird entlang einer Zigarettenbahn 16 transportiert, wobei die Zigaretten in Förderrichtung orientiert sind. Die Zigarettengruppe 12 liegt dabei auf einer unteren Bahnplatte 17 zwischen aufrechten Seitenführungen 18, 19 und einer Oberführung 20. Die Zigarettengruppen 12 werden durch Mitnehmer 21 vorzugsweise kontinuierlich mit Abstand voneinander gefördert. Die Mitnehmer 21 sind an endlosen Förderorganen, zum Beispiel an Ketten, angebracht und treten durch einen Schlitz 22 in der Bahnplatte 17 hindurch.

Die Zigarettengruppen 12 werden an einem im Bereich der Zigarettenbahn 16 angeordneten Prüfaggregat 23 vorbeibewegt. Dieses ist an der Oberseite der Zigarettenbahn 16 positioniert, und zwar in einer Ausnehmung der Oberführung 20. Das Prüfaggregat 23 besteht aus einem allseits geschlossenen Gehäuse 24 mit einer Prüföffnung 25 an der unteren, den Zigarettengruppen 12 zugekehrten Seite. Die Prüföffnung 25 erstreckt sich schlitzförmig über die volle Breite der Zigarettengruppe 12 bzw. der Zigarettenbahn 16.

Das Gehäuse 24 kann aber auch eine auf der Seite der Prüföffnung 25 angebrachte Verschlußplatte 25a aufweisen. Diese Verschlußplatte 25a ist auswechselbar ausgebildet und abnehmbar mit dem Gehäuse 24 verbunden, um unterschiedliche Verschlußplatten 25a in Abhängigkeit von der gebildeten Zigarettenformation bzw. Zigarettengruppe 12 einsetzen zu können.

Innerhalb des Prüfaggregats 23 bzw. innerhalb des Gehäuses 24 ist als Prüforgan ein CCD-Zeilenchip 10 positioniert, und zwar mit der Längsausrichtung quer zur Zigarettengruppe 12 und mithin entweder quer oder längs zur Bewegungsrichtung. Der CCD-Zeilenchip 10 ist so gestaltet, daß die Oberseite der Zigarettengruppe 12 bzw. die obere Lage 13 während der Vorbeibewegung auf voller Breite optisch von dem CCD-Zeilenchip 10 erfaßt wird.

Zu diesem Zweck ist der CCD-Zeilenchip 10 innerhalb des Gehäuses 24 in einer Kammer bzw. in einer Halterung 26 angeordnet, die gegenüber den zu prüfenden Zigaretten 11 bzw. der Zigarettengruppe 12 eine Durchtrittsöffnung für Licht bzw. optische Signale aufweist. Innerhalb dieser Durchtrittsöffnung ist eine Optik bzw. ein Linsen-Blenden-System 27, also insbesondere eine Linse angeordnet, die das Bild von der Oberseite der Zigarettengruppe 12 auf den CCD-Zeilenchip 10 fokussiert, so daß dieser alle Zigaretten 11 in der Lage 13 optisch erfassen kann.

Zum Prüfaggregat 23 gehören Lichtelemente zur optimalen Ausleuchtung des zu prüfenden Gegenstands, also des oberen Bereichs der Zigarettengruppe 12. Es handelt sich dabei um mehrere, nämlich vier Lichtquellen 28, 29, die paarweise an einander gegenüberliegenden Seiten innerhalb des Gehäuses 24 angeordnet und hier mit der Halterung 26 verbunden sind. Je zwei Lichtquellen 28, 29 sind zu beiden Seiten der Bewegungsbahn der Zigarettengruppe 12 positioniert. Deren Licht ist aufgrund einer Schrägstellung der Lichtquellen 28, 29 in bestimmter Weise auf die Zigarettengruppe 12 gerichtet, nämlich zur Hervorhebung von hellen und dunklen Bereichen. Bei den Lichtquellen 28, 29 handelt es sich vorzugsweise um LED-Elemente mit Licht im Infrarotbereich.

Das von dem CCD-Zeilenchip 10 aufgenommene Bild von der Oberseite der Zigarettengruppe 12 wird in einer Auswerteeinheit mit einem Referenzbild verglichen. Bei Abweichungen aufgrund fehlerhafter Ausgestaltung einer Zigarettengruppe 12 wird ein Fehlersignal erzeugt zum Aussondern der betreffenden Zigarettengruppe aus dem Fertigungsprozeß. Der CCD-Zeilenchip 10 ist im vorliegenden Falle mit einer innerhalb des Prüfaggregats 23 bzw. innerhalb des Gehäuses 24 angeordneten Tragplatte 30 verbunden, bei der es sich um eine Platine handelt. Im oberen Bereich des Gehäuses 24 können Prozessoren, Speicher etc. für die Auswertung der optoelektronischen Signale des CCD-Zeilenchips 10 angeordnet sein.

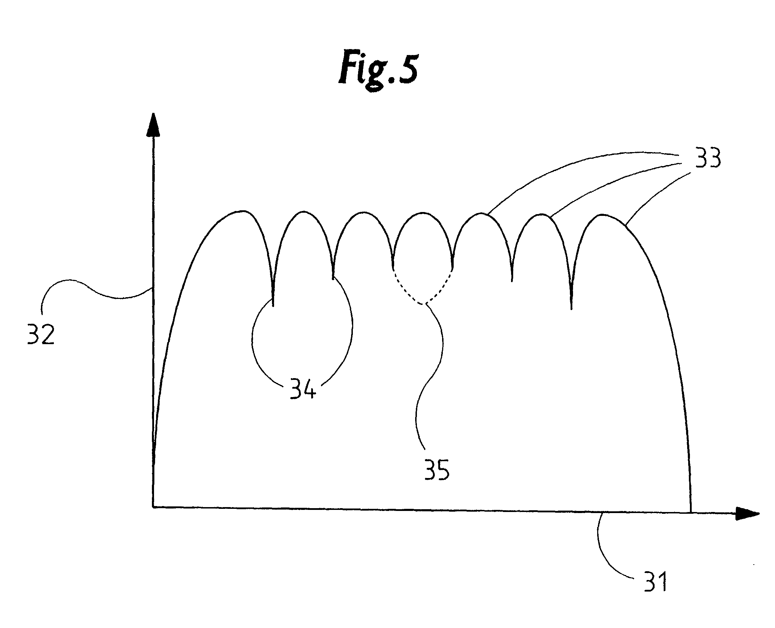

Das von dem CCD-Zeilenchip 10 aufgenommene Bild der Zigarettengruppe 12 ist hinsichtlich der auswertbaren Größen in Fig. 5 graphisch wiedergegeben. Aufgrund der Ausleuchtung der Zigarettengruppe 12 ergeben sich Bereiche unterschiedlicher Lichtintensität. Die Zigaretten bewirken eine stärkere Reflektion von Licht als die zwischen den Zigaretten gebildeten Lücken. Diese Unterschiede der Lichtwerte werden mit Hilfe des CCD-Zeilenchips 10 aufgenommen und verwertet. Die Graphik gemäß Fig. 5 zeigt im Bereich der Abszisse 31 die nebeneinanderliegenden lichtempfindlichen Elemente des CCD-Zeilenchips 10, also die CCD-Linie. Auf der Ordinate 32 ist die gemessene Lichtintensität aufgetragen. Erhöhungen 33 der Kurve entsprechen jeweils einer vorhandenen Zigarette 11. Vertiefungen 34 sind die Zwischenräume zwischen den Zigaretten 11. Eine gestrichelte Mulde 35 soll ein Bild andeuten, welches entsteht, wenn im Bereich der oberen Lage 13 eine Zigarette 11 fehlt. Bei diesem Prüfverfahren wird im übrigen davon ausgegangen, daß stets eine Veränderung der oberen, geprüften Lage 13 eintritt, wenn innerhalb der Formation der Zigarettengruppe 12 an beliebiger Stelle eine Zigarette 11 fehlt.

Das Prüfaggregat 23 bzw. der CCD-Zeilenchip 10 als Prüforgan und die Lichtquellen 28, 29 sind nicht ständig eingeschaltet, sondern werden taktweise zur Prüfung jeweils einer Zigarettengruppe 12 aktiviert. Zu diesem Zweck ist im Bereich des Prüfaggregats 23 ein optisches Auslöseorgan 36 angeordnet. Dieses besteht aus einem (Licht-)Sender 37 und einem Empfänger 38. Durch den Sender 37 wird eine Lichtschranke erzeugt, die durch die vorbeibewegte Zigarettengruppe 12 unterbrochen oder - wie im vorliegenden Falle - reflektiert und vom Empfänger 38 aufgenommen wird. Sender 37 und Empfänger 38 sind über ein Lichtleitkabel, nämlich über Glasfaserbündel 39 mit einer Lichtquelle einerseits und der Auswerteeinheit andererseits (zur Erzeugung eines Einschaltsignals) verbunden. Sender 37, Empfänger 38 und die Glasfaserbündel 39 sind in schräggerichteten Bohrungen 40 einer unteren Wandung des Gehäuses 24 angeordnet.

Sender 37 und Empfänger 38 müssen jedoch nicht über ein Glasfaserbündel 39 mit einer Lichtquelle bzw. der Auswerteeinheit verbunden sein. Vielmehr kann die Lichtquelle den Sender 37 und ein photoelektrischer Wandler der Empfänger 38 darstellen. Zum Schutz dieser elektrischen Bauteile, ist eine Glasscheibe vor den Bauteilen vorgesehen.

Eine Vertiefung 41 im Gehäuse 24 ermöglicht den Durchtritt der Lichtschranke. Die Organe, nämlich Sender 37 und Empfänger 38, sind demnach gegenüber den Zigarettengruppen 12 zurückgesetzt angeordnet. Das Auslöseorgan 36 befindet sich in Bewegungsrichtung der Zigarettengruppe 12 hinter der Prüföffnung 25. Das Auslöseorgan 36 bewirkt das Einschalten des Prüfaggregats 23, wenn die Zigarettengruppe 12 mit einem in Förderrichtung vornliegenden Bereich die Lichtschranke auslöst. Dadurch erfolgt die Prüfung der Zigarettengruppe 12 in einem mittleren Bereich - bezogen auf die Längserstreckung der Zigaretten 11.

Als Auslöseorgan 36 kann ein Reflexionstaster, eine Einweglichtschranke und/oder eine Reflexionslichtschranke vorgesehen sein, wenn in der Bahnplatte ein Sender oder Empfänger bzw ein Spiegel eingebaut ist.

Bei einer alternativen Ausführung kann das Auslöseorgan 36 jedoch auch entfallen. Insbesondere ist dies möglich, wenn man eine schnelle Auswerteeinheit, insbesondere schnelle Prozessoren verwendet. Der CCD-Zeilenchip 10 braucht dann nicht mehr getaktet zu arbeiten. Vielmehr nimmt er permanent das vorbeilaufende Bild auf. Wenn der vorliegende Bereich der Zigarettengruppe von dem CCD-Zeilenchip 10 erfaßt wird, erfährt das korrespondierende (Bild-)Signal eine steile Flanke, insbesondere einen steilen Anstieg. Diese Flanke bewirkt ein Einschalten der Auswerteeinehit bzw. ein Triggern der Auswerteeinheit, wodurch der Auswertevorgang eingeleitet wird. Dadurch kann das Auslöseorgan 36 entfallen und der CCD-Zeilenchip 10 in einem kontinuierlichen Modus arbeiten.

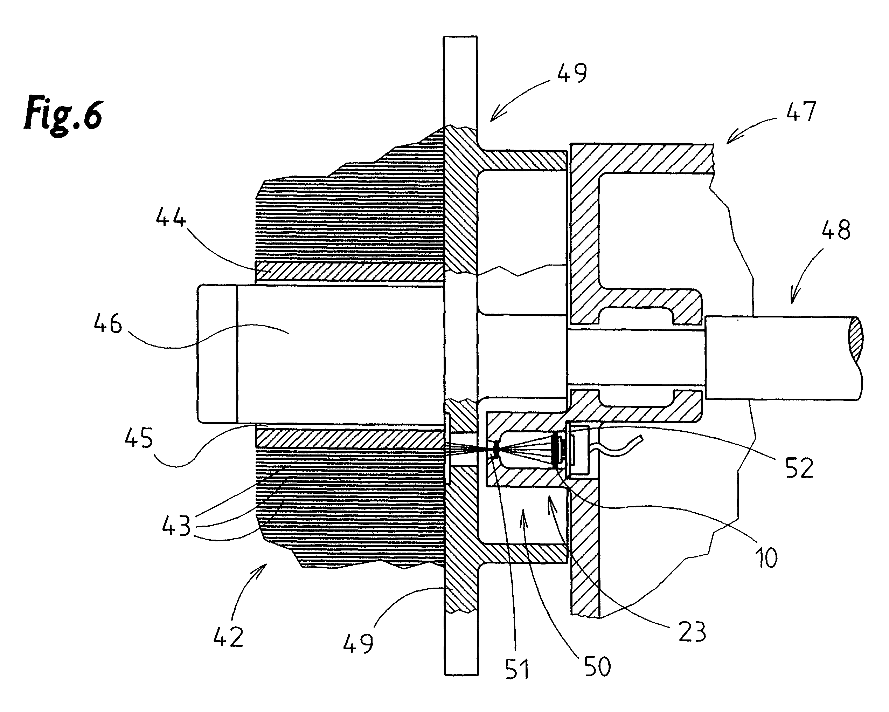

Ein besonderes, nicht zum Schutzgegenstand der Erfindung gehörendes Beispiel einer Prüfvorrichtung ergibt sich aus Fig. 6 bis Fig. 8. Es geht um die (laufende oder taktweise) Überprüfung einer Bobine 42 aus gewickelten Lagen 43 einer Materialbahn. Dabei handelt es sich vor allem um Verpackungsmaterial, zum Beispiel Papier, Folie, Stanniol oder dergleichen. Die Materialbahn ist zur Bildung der Bobine 42 auf einen zylindrischen Bobinenkern 44 gewickelt. Dieser bildet eine zentrale, kreisförmige Mittenöffnung 45.

Die Bobine 42 ist zur Verarbeitung der Materialbahn auf einer Halterung gelagert, nämlich auf einem insbesondere drehbaren Tragzapfen 46, der in die Mittenöffnung 45 eintritt.

Durch das Prüfaggregat 23 wird der Verbrauch der Bobine 42 überwacht. Konkret wird ein Restabschnitt der Materialbahn auf dem Bobinenkern 44 ermittelt, wenn eine neue Materialbahn einer Ersatz-Bobine an die ablaufende Materialbahn anzuschließen ist. Bei der Überwachung ist zu berücksichtigen, daß die Materialbahn nicht vollständig von der laufenden Bobine 42 abgezogen werden kann bzw. darf. Ein Restabschnitt muß für den Anschluß an eine neue Materialbahn bei Einleitung des Verbindungsvorgangs (Splicen) auf der Bobine 42 bzw. dem Bobinenkern 44 vorhanden sein, derart, daß die abgezogene Materialbahn nicht an Spannung verliert und möglicherweise der Rest der Materialbahn vom Bobinenkern 44 abgezogen wird.

Das Prüfaggregat 23 ist ortsfest im Bereich einer Bobinenhalterung positioniert. Diese besteht aus einem Traggestell 47, welches unverdrehbar auf einer mit dem Tragzapfen 46 verbundenen Welle 48 abgestützt ist. Die (drehend angetriebene) Welle 48 ist mit einer Stützscheibe 49 verbunden, an der die Bobine 42 mit dem Bobinenkern 44 anliegt. Der Tragzapfen 46 und die Stützscheibe 49 bilden eine drehende Einheit.

Das feststehende Traggestell 47 bildet ein Gehäuse 50 zur Aufnahme eines Prüforgans, nämlich eines CCD-Zeilenchips 10. Das Gehäuse 50 ist auf der der Bobine 42 zugekehrten Seite des topfförmigen Traggestells 47 angeordnet. Auf der der Bobine 42 zugekehrten Seite weist das Gehäuse 50 eine Prüföffnung 51 auf. Innerhalb derselben ist eine Optik 52 - Linse - bzw. ein Linsen-Blenden-System zur Fokussierung von Licht auf den CCD-Zeilenchip 10 vorgesehen.

Das Prüfaggregat 23 tastet einen Endbereich der Materialbahn ab, also dem Bobinenkern 44 zugekehrte Lagen 43. Konkret wird ein Teilbereich der Wicklung bzw. der Lagen 43 und ein Teilbereich des Bobinenkerns 44 optisch erfaßt. Die Stützscheibe 49 ist in diesem Bereich mit einer Durchtrittsöffnung 53 versehen, ausgerichtet auf das Prüfaggregat 23. Die optische Prüfung findet demnach taktweise statt, nämlich im Moment der Gegenüberstellung der mit der Stützscheibe 49 drehenden Durchtrittsöffnung 53 gegenüber dem Prüfaggregat 23. Entsprechend kann eine nicht gezeigte Lichtquelle, insbesondere aus LED-Dioden, geschaltet sein.

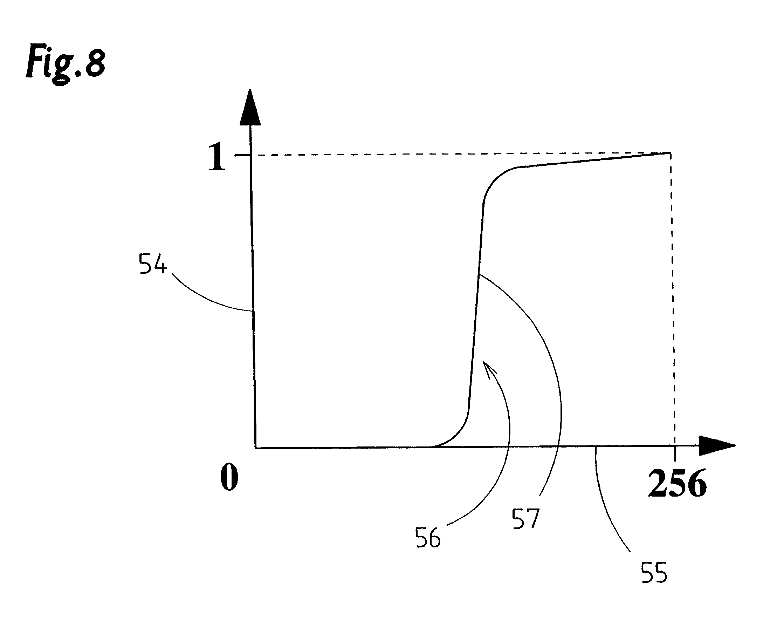

Der quer zu den Lagen 43 gerichtete CCD-Zeilenchip 10 kann aufgrund der unterschiedlichen Helligkeitswerte des von den Lagen 43 und dem Bobinenkern 44 reflektierten Lichts den Verbrauch der Materialbahn feststellen und bei Erreichen einer vorgegebenen Mindestanzahl an Lagen 43 ein entsprechendes Signal zur Einleitung des Splice-Vorgangs erzeugen. Fig. 8 zeigt ein Diagramm, bei dem auf der Ordinate 54 die Helligkeitswerte des auf die einzelnen Sensoren (Pixel) des CCD-Zeilenchips 10 wirkenden Lichts aufgetragen sind. Die Abszisse 55 zeigt die nebeneinanderliegenden Sensoren bzw. Pixel des CCD-Zeilenchips 10 in laufender Numerierung. Eine aufgetragene Kurve 56 ist die den Sensoren/Pixeln des CCD-Zeilenchips 10 zugeordnete Lichtintensität. Der linke Bereich auf der Abszisse 55 zeigt, daß im Bereich des Bobinenkerns 44 kein Licht aufgenommen wird. Ein oberer Ast der Kurve 56 zeigt bei randseitigen Sensoren/Pixeln zunehmende Lichtintensität, wobei am Rand des CCD-Zeilenchips 10 angeordnete Sensoren bereits volle Lichtintensität empfangen. Das Überwachungsorgan ist so eingerichtet, daß bei einer bestimmten Lichtintensität eines bestimmten Sensors 57 der Splice-Vorgang eingeschaltet wird, zum Beispiel bei einem Sensor 57 der Position 228 bei insgesamt 256 Sensoren. Die Anzahl der Sensoren bzw. Pixel ist jedoch im wesentlichen beliebig. Sie beträgt bei einem CCD-Chip bevorzugt 256 oder aber auch 512, 1024, 2048, 4096 etc.

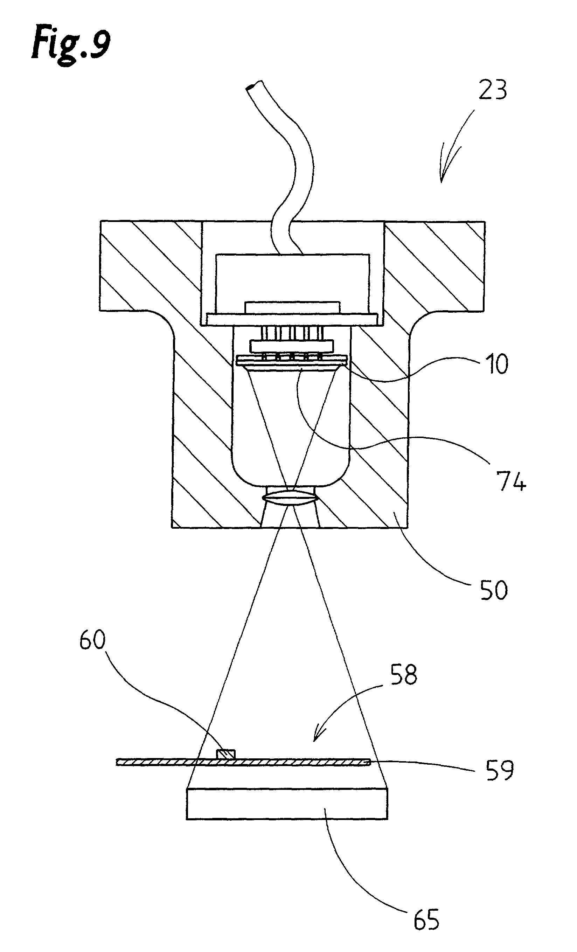

Ein weiteres, ebenfalls nicht zum Schutzgegenstand der Erfindung gehörendes Beispiel für Überprüfungs- bzw. Überwachungsthema ergibt sich aus Fig. 9 bis Fig. 12. Es geht um die korrekte Ausbildung einer Materialbahn 58, zum Beispiel aus Verpackungsmaterial, wie Folie, Papier oder dergleichen. Die Materialbahn 58 wird fortlaufend, kontinuierlich an einem Prüfaggregat 23 der beschriebenen Art vorbeibewegt, wobei zweckmäßigerweise die Materialbahn 58 in horizontaler Ebene gefördert und das Prüfaggregat 23 oberhalb der Materialbahn 58 positioniert ist. Die Prüfung bzw. Kontrolle erstreckt sich im vorliegenden Falle auf zwei Merkmale. Zum einen geht es um eine korrekte Führung bzw. Positionierung eines Bahnrandes 59. Zum anderen ist eine auf der Oberseite der Materialbahn 58 angeordnete Markierung oder dergleichen zu überprüfen, im vorliegenden Falle ein in Längsrichtung der Materialbahn 58 laufender und mit der Materialbahn 58 verbundener Materialstreifen 60. Bei diesem handelt es sich insbesondere um einen Aufreißstreifen für eine Umhüllung aus Folienmaterial.

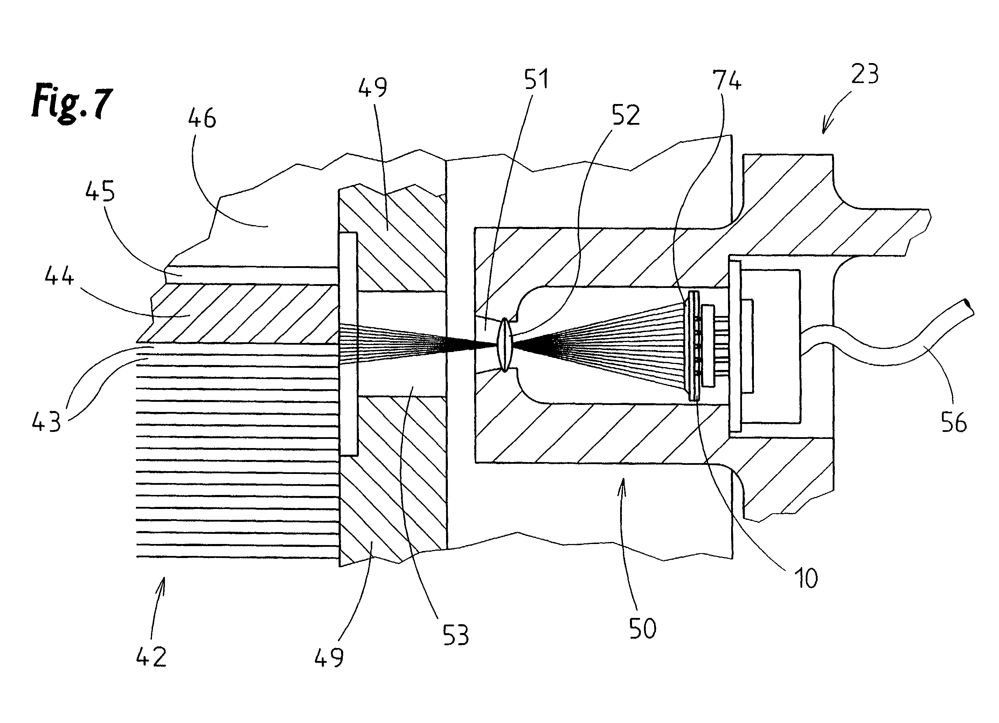

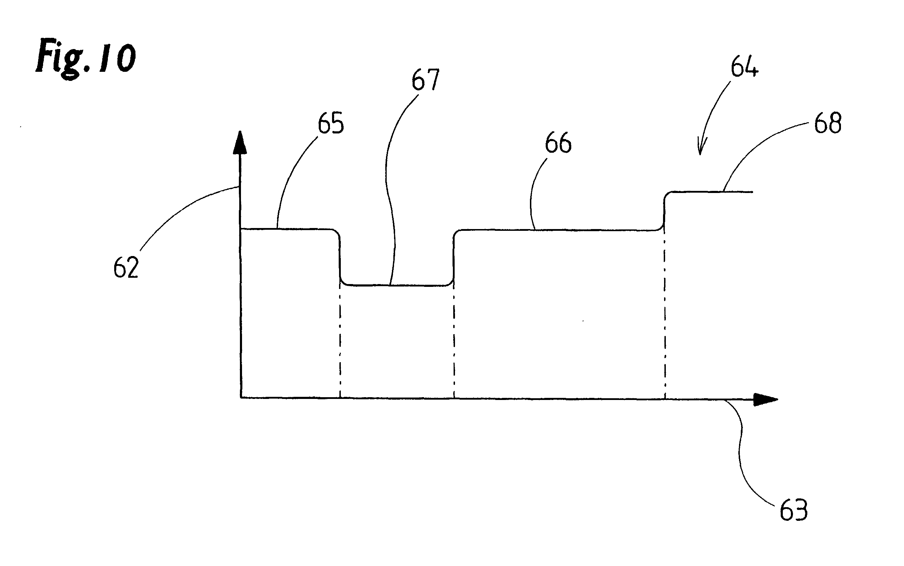

Das Prüfaggregat 23 gemäß Fig. 9 ist in gleicher bzw. analoger Weise ausgebildet wie das Prüfaggregat 23 der Fig. 7. Der CCD-Zeilenchip 10 tastet einen randseitigen Bereich der Oberseite der Materialbahn 58 ab. Eine Lichtquelle 61 ist bei diesem Beispiel unterhalb der Materialbahn 58 angeordnet, so daß diese auf der zum Prüfaggregat 23 gegenüberliegenden Seite beleuchtet ist. Bei lichtdurchlässigen Materialbahnen ergibt sich so eine Kurve gemäß Fig. 10, bei der wiederum auf einer Ordinate 62 die Lichtintensität und auf einer Abszisse 63 die nebeneinanderliegenden Sensoren bzw. Pixel des CCD-Zeilenchips 10 aufgetragen sind. Eine Kurve 64 entspricht den von dem CCD-Zeilenchip 10 aufgenommenen Helligkeitswerten bei korrekter Ausbildung der Materialbahn. Ein - von links gesehen - erster Kurvenabschnitt 65 und ein dritter Kurvenabschnitt 66 geben den Lichtwert im Bereich der (unbeschichteten) Materialbahn 58 wieder. Dazwischen wird ein Kurvenabschnitt 67 aufgenommen, der eine deutlich geringere Lichtintensität aufweist und die Position des Materialstreifens 60 wiedergibt. Schließlich entspricht ein randseitiger Kurvenabschnitt 68 dem Bereich außerhalb der Materialbahn 58. Die Kurvenabschnitte 65..68 müssen bei korrekter Ausbildung der Materialbahn stets die gleiche vorgegebene Breite und Position aufweisen. Abweichungen der aufgenommenen Lichtwerte ergeben sich aus Fehlstellungen der Materialbahn 58 oder des Materialstreifens 60.

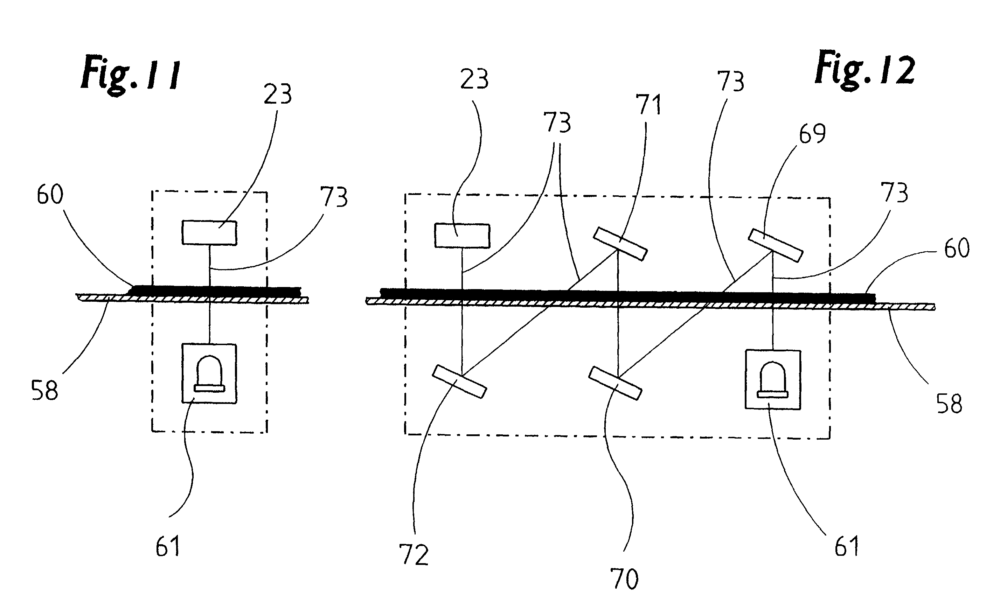

Auch langgestreckte Gegenstände können an mehreren Bereichen durch ein einziges Prüfaggregat 23 mit quergerichtetem CCD-Zeilenchip überprüft bzw. kontrolliert werden. Bei dem Ausführungsbeispiel gemäß Fig. 11 und Fig. 12 geht es analog zu Fig. 9 und 10 um die Überprüfung einer Materialbahn 58 auf einem längeren Abschnitt, wobei entsprechend Fig. 9 mehrere äußere Merkmale überprüft werden können, zum Beispiel ein Materialstreifen 60 bzw. Aufreißstreifen und/oder ein Bahnrand 59.

Oberhalb der Materialbahn 58 ist das Prüfaggregat 23 positioniert in der Ausführung gemäß Fig. 9. Eine Lichtquelle 61 ist versetzt zum Prüfaggregat 23 unterhalb der Materialbahn 58 positioniert. Der zwischen Prüfaggregat 23 und Lichtquelle 61 liegende Bereich der Materialbahn 58 wird durch Reflektion von Licht erfaßt, nämlich durch die Anordnung von Spiegeln 69, 70, 71, 72 oberhalb und unterhalb der Materialbahn 58. Die Spiegel 69..72 sind so positioniert, daß der von der Lichtquelle 61 ausgegebene Lichtstrahl 73 quer durch die Materialbahn 58 hindurchtritt und auf der gegenüberliegenden Seite von einem ersten Spiegel 69 reflektiert wird, so daß der Lichtstrahl 73 in schräger Richtung wieder durch die Materialbahn 58 hindurchtritt auf den nächsten Spiegel 70. Dieser reflektiert den Lichtstrahl 73 in Querrichtung auf einen unmittelbar gegenüberliegenden Spiegel 71 oberhalb der Materialbahn 58. Ein weiterer Spiegel 72 unterhalb des Prüfaggregats 23 überträgt den Lichtstrahl 73 auf den CCD-Zeilenchip 10. Durch den mehrfachen Bahndurchtritt wird das Licht teilweise absorbiert. Hierauf sind die Sensoren des CCD-Zeilenchips 10 eingerichtet. Abweichungen aufgrund Fehlstellung des Materialstreifens 60 führen zu einer entsprechend registrierbaren Änderung der Lichtaufnahme im Bereich des CCD-Zeilenchips.

Bei den Prüfaggregaten 23 gemäß Fig. 6, 7 sowie gemäß Fig. 9 ist jeweils dem CCD-Zeilenchip 10 ein Streulichtfilter 74 vorgeordnet als Abdeckung mit optischer Wirkung. Dieser Streulichtfilter 74 soll insbesondere kurzwelliges Umgebungslicht als mögliche Störungsquelle ausfiltern.

Ein besonderer Vorteil des beschriebenen Systems liegt darin, daß die Auswertung des Bildes vom CCD-Chip über eine Änderung der Software an jede Applikation anpaßbar ist. Diese Softwareänderung wird dazu im Speicher der Auswerteeinheit hinterlegt.

### Bezugszeichenliste:

- 10: CCD-Zeilenchip
- 11: Zigarette
- 12: Zigarettengruppe
- 13: Lage
- 14: Lage
- 15: Lage
- 16: Zigarettenbahn
- 17: Bahnplatte
- 18: Seitenführung
- 19: Seitenführung
- 20: Oberführung
- 21: Mitnehmer
- 22: Schlitz
- 23: Prüfaggregat
- 24: Gehäuse
- 25: Prüföffnung
- 25a: Verschlußplatte
- 26: Halterung
- 27: Optik
- 28: Lichtquelle
- 29: Lichtquelle
- 30: Tragplatte
- 31: Abszisse
- 32: Ordinate
- 33: Erhöhung
- 34: Vertiefung
- 35: Mulde
- 36: Auslöseorgan
- 37: Sender
- 38: Empfänger
- 39: Glasfaserbündel
- 40: Bohrung
- 41: Vertiefung
- 42: Bobine
- 43: Lage
- 44: Bobinenkern
- 45: Mittenöffnung
- 46: Tragzapfen
- 47: Traggestell
- 48: Welle
- 49: Stützscheibe
- 50: Gehäuse
- 51: Prüföffnung
- 52: Optik
- 53: Durchtrittsöffnung
- 54: Ordinate
- 55: Abszisse
- 56: Kurve
- 57: Sensor
- 58: Materialbahn
- 59: Bahnrand
- 60: Materialstreifen
- 61: Lichtquelle
- 62: Ordinate
- 63: Abszisse
- 64: Kurve
- 65: Kurvenabschnitt
- 66: Kurvenabschnitt
- 67: Kurvenabschnitt
- 68: Kurvenabschnitt
- 69: Spiegel
- 70: Spiegel
- 71: Spiegel
- 72: Spiegel
- 73: Lichtstrahl
- 74: Streulichtfilter

## Patentansprüche

1. Vorrichtung zum Prüfen von in Lagen (13, 14, 15) formierten Zigarettengruppen (12) hinsichtlich vollständiger bzw. korrekter Ausbildung, wobei Zigarettengruppen (12) aufeinanderfolgend durch einen Zigarettenförderer an einem Prüfaggregat (23) mit einem eine Anzahl von lichtempfindlichen Prüfelementen aufweisenden Prüforgan mit einer Auswerteeinrichtung vorbeibewegbar sind, **gekennzeichnet durch** folgende Merkmale:
a) das Prüforgan ist ein CCD-Zeilenchip (10) mit einer Vielzahl von in Dichtreihe nebeneinander angeordneten lichtempfindlichen Bauteilen als Prüfelemente,
b) der CCD-Zeilenchip (10) ist quer zu den Zigaretten (11) der zu prüfenden Zigarettengruppe (12) gerichtet, und oberhalb derselben angeordnet,
c) im Prüfaggregat (23) sind Lichtquellen (28, 29) zur Ausleuchtung der Zigarettengruppe (12) mindestens während der Prüfphase angeordnet,
d) **durch** den CCD-Zeilenchip (10) ist aufgrund von reflektiertem Licht ein sich aus unterschiedlichen Helligkeitswerten der nebeneinanderliegenden Zigaretten (11) ergebendes Profil der Oberseite der oberen Lage (13) der zu prüfenden Zigarettengruppe (12) erfassbar und in der Auswerteeinheit mit einer standardmäßigen Darstellung vergleichbar.

2. Vorrichtung nach Anspruch 1, **gekennzeichnet durch** LED-Lichtquellen im Infrarotbereich.

3. Vorrichtung nach Anspruch 1 oder 2, **dadurch gekennzeichnet, dass** dem CCD-Zeilenchip (10) eine Optik (27, 52) bzw. ein Linsen-Blenden-System vorgeordnet ist, durch die bzw. durch das das von der zu prüfenden Zigarettengruppe (12) aufgenommene Bild bzw. reflektierte Licht auf den CCD-Zeilenchip (10) fokussierbar ist.

4. Vorrichtung nach Anspruch 1 oder einem der weiteren Ansprüche, **dadurch gekennzeichnet, dass** der CCD-Zeilenchip (10) mit Optik (27, 52) in einem Gehäuse (24, 50) angeordnet ist, welches auf der der Zigarettengruppe (12) zugekehrten unteren Seite eine Öffnung aufweist, nämlich eine Prüföffnung (25) bzw. Durchtrittsöffnung (53) zum Erfassen der zu prüfenden Zigarettengruppe (12).

5. Vorrichtung nach Anspruch 1 oder einem der weiteren Ansprüche, **dadurch gekennzeichnet, dass** das Prüfaggregat (23) taktweise betätigbar ist, nämlich nach Maßgabe der in Abständen am Prüfaggregat (23) vorbeibewegten Zigarettengruppen (12), wobei dem Prüfaggregat (23) ein vorzugsweise innerhalb des gemeinsamen Gehäuses (24) untergebrachtes Auslöseorgan (36) zugeordnet ist, welches eine vorbeibewegte Zigarettengruppe (12) berührungslos, insbesondere optoelektronisch, erkennt.

## Claims

1. Device for checking cigarette groups (12) formed in layers (13, 14, 15) with respect to complete and/or correct formation, it being possible for cigarette groups (12) to be moved in succession by a cigarette conveyor past a checking set (23) with a checking member which has a number of light-sensitive checking elements and an evaluation device, **characterized by** the following features:
a) the checking member is a CCD linear array chip (10) with a multiplicity of light-sensitive components, arranged in a tight row next to one another, as checking elements,
b) the CCD linear array chip (10) is directed transverse to the cigarettes (11) of the cigarette group (12) to be checked and arranged above the latter,
c) light sources (28, 29) for illuminating the cigarette group (12) at least during the checking phase are arranged in the checking set (23), and
d) a profile, resulting from different brightness values of the adjacent cigarettes (11), of the top side of the top layer (13) of the cigarette group (12) to be checked can be detected by the CCD linear array chip (10) on the basis of reflected light, and can be compared in the evaluation unit with a standard representation.

2. Device according to Claim 1, **characterized by** LED light sources in the infrared region.

3. Device according to Claim 1 or 2, **characterized in that** arranged upstream of the CCD linear array chip (10) is an optical system (27, 52) or a lens-stop system by means of which the image taken of the cigarette group (12) to be checked, or reflected light, can be focused onto the CCD linear array chip (10).

4. Device according to Claim 1 or one of the further claims, **characterized in that** the CCD linear array chip (10) together with the optical system (27, 52) is arranged in a housing (24, 50) which, on the lower side facing the cigarette group (12), has an opening, specifically a checking opening (25) or through-opening (53) for detecting the cigarette group (12) to be checked.

5. Device according to Claim 1 or one of the further claims, **characterized in that** the checking set (23) can be activated cyclically, specifically in accordance with cigarette groups (12) moving past the checking set (23) at intervals, there being assigned to the checking set (23) a tripping member (36) which is preferably accommodated inside the common housing (24) and detects a passing cigarette group (12) in a contactless fashion, in particular optoelectronically.

## Revendications

1. Dispositif de contrôle de groupes de cigarettes (12) formés en couches (13, 14, 15) en ce qui concerne leur état complet et leur forme correcte, dans lequel un transporteur de cigarettes fait passer les groupes de cigarettes (12) les uns après les autres devant un dispositif de contrôle (23) comportant un organe de contrôle présentant un certain nombre d'éléments de contrôle photosensibles et pourvu d'un dispositif d'exploitation, **caractérisé par** les caractéristiques suivantes :
a) l'organe de contrôle est une puce à ligne de CCD (10) ayant comme éléments de contrôle un grand nombre d'éléments photosensibles placés les uns à côté des autres en rang serré,
b) la puce à ligne de CCD (10) est dirigée perpendiculairement aux cigarettes (11) du groupe de cigarettes (12) à contrôler et placée au-dessus de celles-ci,
c) le dispositif de contrôle (23) contient des sources lumineuses (28, 29) pour l'éclairage du groupe de cigarettes (12) au moins pendant la phase de contrôle,
d) la puce à ligne de CCD (10) permet, par lumière réfléchie, de saisir un profil du côté supérieur de la couche supérieure (13) du groupe de cigarettes (12) à contrôler qui résulte de valeurs différentes de luminosité des cigarettes situées les unes à côté des autres (11) et de le comparer dans le dispositif d'exploitation à une représentant standard.

2. Dispositif selon la revendication 1, **caractérisé par** des sources lumineuses constituées de diodes lumineuses fonctionnant dans l'infrarouge.

3. Dispositif selon l'une des revendications 1 et 2, **caractérisé par le fait qu'**avant la puce à ligne de CCD (10) est placé un système optique (27, 52) ou un système de lentilles et de diaphragmes qui focalise sur la puce à ligne de CCD (10) l'image reçue ou la lumière réfléchie par le groupe de cigarettes (12) à contrôler.

4. Dispositif selon la revendication 1 ou une des autres revendications, **caractérisé par le fait que** la puce à ligne de CCD (10), avec système optique (27, 52), est placée dans une boîte (24, 50) qui présente, sur le côté inférieur dirigé vers le groupe de cigarettes (12), une ouverture, à savoir une ouverture de contrôle (25) ou une ouverture de passage (53) pour la détection du groupe de cigarettes (12) à contrôler.

5. Dispositif selon la revendication 1 ou une des autres revendications, **caractérisé par le fait que** dispositif de contrôle (23) est actionné de manière discontinue, à savoir d'après les groupes de cigarettes (12) qui passent espacés devant le dispositif de contrôle (23), au dispositif de contrôle (23) étant associé un organe de déclenchement (36), de préférence logé à l'intérieur de la boîte commune (24), qui reconnaît sans contact, en particulier optoélectroniquement, un groupe de cigarettes (12) qui passe.
